Europäisches Patentamt

European Patent Office

Office européen des brevets

(11) Veröffentlichungsnummer: **0 598 311 A2**

## EUROPÄISCHE PATENTANMELDUNG

(21) Anmeldenummer: **93118143.2**

(51) Int. Cl.5: **A01B 29/04**

(22) Anmeldetag: **09.11.93**

(30) Priorität: **11.11.92 DE 4238022**
**05.04.93 DE 4310797**
**07.10.93 DE 4334221**
**02.08.93 DE 9311407 U**

(43) Veröffentlichungstag der Anmeldung:
**25.05.94 Patentblatt 94/21**

(84) Benannte Vertragsstaaten:
**AT BE CH DE DK ES FR GB GR IE IT LI LU MC NL PT SE**

(71) Anmelder: **Hendlmeier, Konrad**

Ehweg 1
**D-93107 Untersanding(DE)**

(72) Erfinder: **Hendlmeier, Konrad**
**Ehweg 1**
**D-93107 Untersanding(DE)**

(74) Vertreter: **Wasmeier, Alfons, Dipl.-Ing. et al**
**Patentanwälte Wasmeier & Graf,**
**Greflinger Strasse 7,**
**Postfach 10 08 26**
**D-93008 Regensburg (DE)**

(54) Vorrichtung und Verfahren zum Verfestigen des Bodens für landwirtschaftliche Bodenbearbeitungs- und -sävorgänge.

(57) Eine Vorrichtung zum Verfestigen des Bodens mittels Stempelelementen (47-50) für Bodenbearbeitungs- und Sävorgänge weist auf einer horizontalen Achse angeordnete (45,46), umlaufende Stempelwerkzeuge (47-50) auf, deren Querschnitt sich in radialer Richtung von innen nach außen vergrößert, derart, daß die auf dem äußeren Umkreis ausgebildeten Wirkflächen bzw. deren in radialer Richtung erzeugte Projektionen der Stempelköpfe einen größeren Flächeninhalt als die Querschnittsfläche der Stempelstiele hat. Die Scharstiele der in Fahrtrichtung hinteren Reihe(n) haben vorzugsweise einen geringeren Abstand voneinander als die Scharstiele der vorderen Reihen, wodurch die Gesamtbaulänge der Maschine erheblich verringert werden kann.

FIG.7

Rank Xerox (UK) Business Services
(3.10/3.09/3.3.4)

Die Erfindung betrifft landwirtschaftliche Maschinen und Verfahren für die Durchführung von Bodenbearbeitungs- und -sävorgängen unter Verwendung von Stempelelementen.

Zur Bodenverfestigung werden verschiedene Geräte eingesetzt, beispielsweise Glattwalzen, die aus Ringen und Scheiben mit unterschiedlichen Durchmessern auf einer gemeinsamen Achse bestehen oder auf zwei parallelen Achsen auf Lücke versetzt ineinandergreifen. Solchen ring- und scheibenförmigen Bodenverfestigungsgeräten, wie Prismen-, Cambridge- oder Ringverdichtern ist gemeinsam, daß ihre Wirkfläche, d.h. die radial äußere Umfangsfläche, die mit dem Boden in Eingriff kommt, prismatisch mit der Spitze voraus im Boden läuft, also die Projektion der Wirkfläche auf den überfahrenen Boden einen kleineren Flächeninhalt hat als weiter radial innen zur Achse liegende Abschnitte.

Als Verfestigungs- und Stützwalzenvorrichtungen sind ferner horizontal wirkende Stab-, Spiral-, Coil- und Zahnpackerwalzen im Einsatz.

Allen derartigen Bodenverfestigungsgeräten ist gemeinsam, daß die prismatischen Wirkflächen bei feuchter Erde von innen zukleben, indem Erde von der spitzen Wirkfläche (Prismenspitze) zur breiteren Grundfläche geschoben wird und damit der freie Raum zwischen den Wirkflächen zuwächst und wirkungslos wird, und daß die horizontal arbeitenden Wirkflächen bei Stab-, Spiral-, Coil- oder Zahnpackerwalzen durch den Abstand, der für die Selbstbefreiung erforderlich ist, damit Steine und Klumpen durchgedrückt werden, eine unzureichende Verdichterwirkung ergeben, so daß derartige Walzen vorwiegend als Stützwalzen arbeiten.

Auch sind, z.B. aus US-PS 1 931 766 Bodenbearbeitungswalzen in Form zweier in axialer Richtung nebeneinander angeordneter Einheiten bekannt, auf deren Umfangsfläche radial verlaufende Schäfte mit radial äußeren, am Schaftende angeordneten Druckplatten vorgesehen sind. Die Schäfte und Druckplatten sind unmittelbar benachbart zueinander sowie in axialer wie in Umfangsrichtung auf der Walzenoberfläche angeordnet. Vor den Walzen ist eine Nivellierschiene vorgesehen, die den Boden für die Walzen ebnet; diese Schiene ist höhenverstellbar. Derartige bekannte Walzensysteme eignen sich für den Einsatz bei Sävorgängen nicht.

Des weiteren ist aus der DE-OS 40 25 989 eine Vorrichtung bekannt, bei der das Erdreich in Höhe der Saattiefe kontinuierlich durchtrennt und soweit angehoben wird, daß das Saatgut an der angehobenen Stelle auf die Bodensohle abgelegt werden kann. Anschließend wird der angehobene Boden wieder abgesenkt und damit das Saatgut bedeckt. Vor den in den Boden eingreifenden Bearbeitungswerkzeugen, vorzugsweise Flügelscharen, ist eine auf ihrem Umfang mit Stäben, Fingern oder dgl. Schlagelementen versehene Trommel vorgesehen, wobei die Schlagelemente auf die auf der Bodenoberfläche liegenden Pflanzenteile einwirken und die Pflanzenteile zerschneiden sollen. Die Praxis hat gezeigt, daß die Funktion einer derartigen vorgeschalteten Trommel mit Schlagelementen nicht einwandfrei ist. Insbesondere ist das beabsichtigte Zerschneiden der pflanzlichen Rückstände mit erheblichen Problemen belastet, es kommt häufig vor, daß diese pflanzlichen Rückstände in die Särillen gelangen und das Auflaufen des Saatgutes verhindern.

Bei Direktsämaschinen mit mehrreihig angeordneten Säscharen, mit verstellbaren Scharstielen und den Boden bis zur wasserführenden Schicht aufreißenden Zinken sind die Scharstiele von in Fahrtrichtung hintereinander angeordneten Scharstielreihen nebeneinander in allen Reihen gleich weit voneinander entfernt mit einem Abstand von etwa 60 - 80 cm angeordnet. Der Abstand der Scharstiele einer Reihe voneinander ist dabei auch durch die auf dem Boden liegende organische Masse bedingt, da dann, wenn der Abstand der Scharstiele zu gering gewählt wird, ein Verstopfen oder Verlegen durch Stoppeln, Stroh, Mulch etc. zwischen benachbarten Stielen eintreten kann. Somit ist ein relativ großer Abstand der Scharstiele voneinander (z.B. 60 - 80 cm) innerhalb einer Reihe erforderlich. Dies führt dazu, daß bei einer vorgegebenen Anzahl von Gesamtscharstielen und damit Saatgutauslässen die Anzahl der hintereinander angeordneten Scharstielreihen größer sein muß, als wenn die Scharstiele in einen kleineren Abstand zueinander angeordnet werden. Dies führt zwangsweise zu einer größeren Baulänge der Maschine. Beim Durchziehen der Zinken durch den Boden kommt es ferner zwangsweise zusätzlich zu den Erdwallanhäufungen zu beiden Seiten der Scharstiele zu Ansammlungen von Erdreich-Pflanzen-Gemisch, das, wenn es in der Saatrille verbleibt, die Keimlinge am Auflaufen behindert.

Aufgabe der Erfindung ist es, eine Vorrichtung der gattungsgemäßen Art so auszugestalten, daß ein störungsfreies Arbeiten zur Verfestigung des Bodens auch bei ungünstigen Boden- und Witterungsverhältnissen, z.B. bei klebenden Böden, sichergestellt ist, und insbesondere ein Zusetzen bzw. Zukleben der Wirkfläche bzw. der Räume zwischen benachbarten Wirkflächen verhindert wird.

Insbesondere ist auch Aufgabe der Erfindung, wirksam zu verhindern, daß pflanzliche Rückstände in diese Rille gelangen und das Auflaufen des Saatgutes behindern. Des weiteren ist Aufgabe der Erfindung, Direktsämaschinen mit möglichst geringer Baulänge auszugestalten und gleichzeitig zu verhindern, daß zwischen den Scharstielen vorhandene organische Masse zu einem Verstopfen oder Verlegen der Scharstiele führt, und daß die Scharstiele von den auf der Bodenoberfläche liegenden organischen Pflanzenrückständen befreit werden.

Die Kriterien für die Auslegung der erfindungsgemäßen Vorrichtung sind vor allem durch die Form der Wirkfläche, d.h. der radial äußeren Fläche der Werkzeugelemente, die unmittelbar die Bodenverfestigung ergeben, die Ausgestaltung der Stempelstiele bzw. Stempelkopfbefestigungen, deren Flächeninhalt in den Schnittebenen parallel zur Wirkflächenebene kleiner als der Flächeninhalt der Wirkfläche des Stempels ist, und die Freiräume zwischen den Wirkflächen, die ein Zusetzen bei feuchter Erde verhindern, und damit eine einwandfreie Arbeitswirkung der Vorrichtung ergeben, bestimmt.

Bei der erfindungsgemäßen Vorrichtung verfestigen die jeweiligen Stempelwerkzeuge über die Wirkflächen der Stempelelemente bei ihrer Abwärtsbewegung den Boden, die Stempel wirken dabei wie Scheiben oder umlaufende Bänder, deren Mantelfläche unterbrochen ist. Jede Wirkfläche eines Stempelelementes eines Stempelwerkzeuges ist dabei Teil eines Umfangskreises, der durch den Freiraum zwischen benachbarten Stempelelementen in Umfangsrichtung unterbrochen ist. Die Breite der Wirkfläche ist vorzugsweise kleiner als der Abstand zweier benachbarter Wirkflächen auf dem Umfangskreis, bei einer speziellen Ausführung z.B. zwischen 4 und 8 cm. Auf einer gemeinsamen Achse sind eine Vielzahl einzelner Stempelwerkzeuge parallel zueinander im Abstand angeordnet, wobei der Abstand so groß gewählt ist, daß ein Ankleben bzw. ein Aufbauen von feuchtem Erdreich an den Wirkflächen verhindert wird, weil an diesen Unterbrechungsstellen nach Erreichen einer ausreichenden Höhe über dem Boden das angeklebte Erdreich aufgrund fehlender Statik von selbst abbricht.

Aufgrund der voneinander in Umfangsrichtung beabstandeten Wirkflächen der einzelnen Stempelelemente und der dadurch gegebenen Freiräume entsteht eine unterbrochene Mantelfläche, so daß durch diese Freiräume ebenfalls ein Abbrechen von evtl. angeklebtem Erdreich erreicht wird. Diese Unterbrechungen der Mantelfläche dienen bei einer weiteren Ausführungsform der Erfindung auch dazu, daß bei parallelen, im Abstand zueinander angeordneten Achsen der Abstand zweier benachbarter Achsen so gewählt werden kann, daß zwei auf parallelen Achsen hintereinander angeordnete Stempelelemente zahnradförmig ineinander eingreifen, wenn die einzelnen Stempelelemente so auf der jeweiligen Achse befestigt sind, daß sie auf Lücke arbeiten. Dadurch wird eine Verstopfungsgefahr ausgeschaltet.

Mit der Erfindung wird vorgeschlagen, daß die rotierend arbeitenden Stempelelemente nebeneinanderliegend - in Deckung oder in Umfangsrichtung zueinander versetzt - und ineinandergreifend angeordnet sind, wodurch eine kurze Bauweise erzielt wird, die ermöglicht, daß die Vorrichtung in besonders zweckmäßiger Weise hinter Bodenbearbeitungsgeräten und Sävorrichtungen eingesetzt werden kann. Wird die Bodenverdichtungsvorrichtung nach der Erfindung in Verbindung mit Sävorgängen verwendet, kann das Saatgut vor, zwischen oder hinter der Stempelvorrichtung abgelegt werden, so daß damit allen Anforderungen an einen optimalen Betrieb Rechnung getragen werden kann. Bei Vorrichtungen, bei denen mehrere parallele Achsen mit auf diesen Achsen befestigten Stempelwerkzeugen vorgesehen sind, erfolgt der Antrieb der Achsen vorzugsweise gemeinsam, z.B. über eine Antriebskette, eine Kardangelenkverbindung oder dgl. . Damit die Verfestigungswirkung erzielt werden kann, werden z.B. Ballastgewichte verwendet, die beispielsweise mit Wasser gefüllt sind.

Aufgrund der speziellen Formgebung der Stempelelemente, die an der jeweiligen rotierenden Achse befestigt sind, entstehen im Stempelstiel Aussparungen und Freiräume, in denen das neben der Wirkfläche liegende Material bei Bodenkontakt aufgenommen und bei der rotierenden Bewegung hinter dem Verdichter in Form eines Kleinkrümelschleiers abgelegt werden kann. Dies ist für die Saatbeetbereitung und für optimale Keimbedingungen von erheblicher Bedeutung, da eine erwünschte Unterbodenverdichtung mit lockerer Krümelbedeckung erreicht wird.

Die einzelnen, aus Stempelelementen bestehenden Stempelwerkzeuge der erfindungsgemäßen Vorrichtung sind nebeneinander auf einer Welle oder vorzugsweise auf zwei hintereinander angeordneten, parallelen, angetriebenen Wellen angeordnet, die miteinander so zusammenwirken und zueinander so angeordnet sind, daß die Wirkflächen der Stempelelemente auf dem überfahrenen Boden Abdrücke auf der Bodenoberfläche ergeben, die eine Abwicklung der Wirk- bzw. Arbeitsfläche der einzelnen Stempelelemente sind. Die Wirk- bzw. Arbeitsfläche ist dabei der radial äußere Abschnitt eines Stempelelementes, das z.B. kreissektorförmig ausgebildet ist, so daß die Wirkfläche Teil eines Kreisumfanges mit dem Radius des Stempels ist, und die Wirkfläche auf dem Boden abrollt bzw. einen ebenen, vertieften Eindruck auf dem Boden ergibt. Die Arbeits- bzw. Wirkflächen der Stempelelemente haben dabei die Aufgabe, das beim Ziehen der Särille links und rechts der Rille angehäufte Erdreich nach dem Einlegen des Saatgutes zu ebnen und in die Särille zurückzudrücken, so daß die Särille weitgehend aufgefüllt und das Sägut mit Erdreich bedeckt wird. Dabei rollen die auf einem gemeinsamen Umkreis angeordneten Stempelelemente eines jeden Werkzeuges auf dem überfahrenen Boden ab und üben aufgrund des Gewichtes der gesamten Vorrichtung einen Druck auf die Bodenoberfläche auf, so daß ein leicht vertiefter Abdruck erhalten wird, der das Verdrängen des Erdreiches zum Auffüllen der Särille unterstützt.

Die Breite der Wirkflächen, d.h. die Dimension des Stempelelementes in Längsrichtung der Antriebswelle, ist so gewählt, daß die Erdanhäufung links und rechts der Särille etwa überdeckt wird und entsprechend die beidseitigen Erhebungen verdrängt werden. Die durch die Stempelwerkzeuge erzeugten Abdrücke stellen auf dem Boden Abdrücke von Rechteckform dar, die in Laufrichtung an den Stellen unterbrochen sind, an denen keine Wirkflächen wirksam werden. In diese Unterbrechungen greifen die Wirkflächen der zweiten, nachlaufenden Werkzeuggruppe ein, so daß das Erdreich in zwei parallelen Streifen zusammenhängend verfestigt wird.

Die Länge der Wirkflächen der jeweiligen Stempelelemente bestimmt den Umfangsabschnitt des Umkreises und damit die Länge des Abdrukkes auf dem Boden; der Freiraum zwischen zwei benachbarten Abdrückflächen ist bestimmt durch den Abstand der Wirkflächen zweier benachbarter Stempelelemente. Die Anzahl der Stempelelemente, die in Umfangsrichtung zu einem Stempelwerkzeug integriert sind, ist grundsätzlich frei wählbar und nach oben dadurch begrenzt, daß der Abstand zweier benachbarter Stempelelemente mindestens so groß sein muß, daß die Wirkflächen durch Anhaften des Erdreiches und organische Pflanzenteile keine Brücke bilden können, damit durch derartige Überbrückungen evtl. auftretende Verstopfungen sicher vermieden werden und die Stempelelemente ihren Zweck einwandfrei erfüllen können, das links und rechts der Särille erhöhte Erdreich zu verschieben und das Saatgut zu bedecken. Dieser Mindestabstand zwischen zwei benachbarten Stempelelementen bzw. deren Wirkflächen ist bei sandigem Boden erheblich geringer als bei schwerem Boden.

Da der Boden bei der der Erfindung zugrundeliegenden Bodenbearbeitungsmethode mit organischen Pflanzenrückständen bedeckt ist - diese Pflanzenrückstände stammen aus dem lange zurückliegenden Erntevorgang und sind, da der Boden ungepflügt bzw. unbearbeitet bleibt, liegen geblieben - können erhebliche Probleme beim Ausbringen des Sägutes dadurch auftreten, daß die Pflanzenrückstände den Saatgutausbringvorrichtungen bzw. Säscharvorrichtungen im Wege stehen und das Saatgut nicht einwandfrei ausgebracht werden kann. Zur Vermeidung derartiger Probleme wird deshalb gemäß der Erfindung vorgeschlagen, die Stempelelemente z.B. auf ihren Arbeits- bzw. Wirkflächen oder auf ihren Stempelschäften mit einer oder mehreren Spitzen oder dgl. radial nach außen vorstehenden Elementen zu versehen, die eine Zwangsbefreiung der Körnerausbringvorrichtungen bzw. der Säscharvorrichtungen ergeben und die als Zwangsniederhalter wirken können. Mit diesen spitzen Elementen, z.B. Nägeln, Zacken oder dgl., werden die organischen Pflanzenrückstände beim Abrollen der Wirkflächen der Stempelelemente auf dem Boden aufgespießt und bei Weiterdrehung der Stempelelemente in aufgespießtem Zustand angehoben, wobei sie während ihrer Aufwärtsbewegung durch das Eigengewicht wieder nach unten fallen bzw. durch angebrachte Abstreifer zwangsweise entfernt werden können. Auf diese Weise wird verhindert, daß die auf dem überfahrenen Boden befindlichen Pflanzenrückstände den Sävorgang nachteilig beeinflussen können.

In weiterer Ausgestaltung der Erfindung wird vorgeschlagen, die Stempelelemente als rohrförmige Elemente mit über im wesentlichen die gesamte Länge gleichbleibendem Querschnitt auszubilden, wobei de Rohrenden geschlossen sind, und die Rohrabschlußflächen (= Wirk- bzw. Arbeitsflächen) der Krümmung des Umkreises entsprechend gewölbt oder auch wahlweise plan auszubilden. Die Stempelelemente sind dabei als diametrale Rohre ausgebildet, deren Mitte eine Bohrung zur Aufnahme der Antriebsachse aufweist. Andererseits können die Stempelelemente als radiale Elemente ausgebildet sein, deren Länge dem Radius des Umkreises (vermindert um den Achsradius) entspricht, und die auf der Achse befestigt sind. Die Stempelelemente sind dabei in einem Winkel in Umfangsrichtung gegeneinander versetzt, der einen ausreichenden Abstand zwischen zwei benachbarten Wirkflächen ergibt, damit eine Brückenbildung durch anhaftendes Erdreich bzw. Pflanzenrückstände sicher vermieden wird. Beispielsweise können zwei, drei oder sechs Stempelelemente in gleichem Abstand voneinander auf der Achse versetzt befestigt sein; die Zahl der Stempelelemente pro Stempelwerkzeug kann jedoch auch - wenn ein entsprechend großer Durchmesser des Umkreises gewählt wird - größer als sechs sein.

Gemäß einer weiteren Ausgestaltung der Erfindung wird vorgeschlagen, daß das in Särillen abgelegte Saatgut in einem letzten Arbeitsschritt des Säverfahrens, d.h. im Anschluß an das Einbringen des Sägutes in die Särille, mit den zu beiden Seiten der Särillen vorhandenen, aus Erdreich bestehenden Scharstielanhäufungen bedeckt und gleichzeitig die an den Scharstielen angesammelte, zum Teil Erdreich enthaltende organische Masse verteilt und egalisiert wird. Dies geschieht mit Hilfe einer rotierend angetriebenen, auf ihrer Mantelfläche mit Zacken oder dgl. Striegelelementen versehenen Walze, die auf die Scharstielanhäufungen das Saatgut bedeckend eingreift und die mit Erdreich vermischte organische Masse hinter der Ablagestelle des Sägutes verteilt, so daß sicher vermieden wird, daß organische Masse in die Särillen gelangt und das Auflaufen des Sägutes behindert oder völlig unterbindet.

Die rotierend angetriebene Striegelwalze greift dabei nach einer Ausführungsform nicht in das Erdreich ein, sondern streift Ansammlungen der organischen Masse an den Scharstielen ab und zerteilt das auf dem Boden liegende organische Material hinter den Scharstielen der Särohre. Bei einer anderen Ausführungsform greifen die Zinken der Striegelwalze in den Boden ein und dienen gleichzeitig als Abstreifer für die Scharstiele.

Die Striegelwalze läuft bei einer bevorzugten Ausführungsform der Erfindung mit wesentlich höherer Umlaufgeschwindigkeit als die Fahrgeschwindigkeit um, und zwar entgegen dem Uhrzeigersinn (in Fahrtrichtung gesehen), so daß das mit den Zinken der Striegelwalze in Eingriff kommende organische, mit Erdreich verbundene Material nach hinten abgeschleudert wird. Um jede Gefahr der Verletzung von Personen im Bereich hinter der Sämaschine auszuschalten, und um den nach rückwärts abgeschleuderten Strom aus organischer Masse mit Erdreich vermischt zu begrenzen, wird hinter der Striegelwalze eine Abdeckhaube vorgesehen.

Um die Gefahr von Verstopfungen an der Striegelwalze zu vermeiden, sind die Striegelzinken z.B. federnd ausgebildet. Die Zinken der Striegelwalze sind in Fahrtrichtung im Abstand zueinander so angeordnet, daß jeweils zwei Zinken bzw. Zinkenreihen des Saatstriegels einem Saatrohr zugeordnet sind, so daß die Zinken als Abstreifer für organisches Material, das sich an den Scharstielen angesammelt hat, wirken können. Die unteren Auslaßenden der Scharstiele bzw. Saatrohre können dabei über der Erde angeordnet sein oder in der Saatrille laufen, sie können vibrierend oder auch starr ausgebildet sein, und es können einreihige oder mehrreihige Anordnungen von Scharstielen bzw. Saatrohren vorgesehen sein. Der Antrieb der Striegelwalze erfolgt vorzugsweise über die Zapfwelle.

Mit dem Stempelgerät wird das Saatgut mit dem zu beiden Seiten der Särillen anfallenden Erdreich bedeckt, und ein einwandfreies Andrücken dieser Erdwallanhäufungen gegen das Saatgut und damit ein optimales Auflaufen des Saatgutes erzielt. Ein Verstopfen bzw. Zusetzen der Stempelelemente wird wegen des großen Abstandes der Stempelelemente in Umfangsrichtung voneinander aufgrund der konstruktiven Ausgestaltung der Stempelelemente der Stempelwalze sicher vermieden, somit eine Brückenbildung ausgeschlossen. Bei einer derartigen Art der Verdichtung kann das Saatgut vor, zwischen oder hinter den Stempelelementen in die Saatrille abgelegt werden. Das Stempelgerät verhindert aufgrund der konstruktiven Ausgestaltung der Stempelelemente in Form von Teilumfangskreisen, daß die organischen Massen beim Säen überrollt werden; diese organischen Massen werden beim Andrücken der Erdwallanhäufungen aus der Saatrille entfernt. Die Stempelelemente selbst können auch Segmentform haben, können aber auch etwa in radialer Richtung verlaufende positiv oder negativ geformte bogenförmige Elemente sein, an deren Außenfläche ein Ringabschnitt ausreichender Breite vorgesehen ist.

Das der zweiten Scharstielreihe zugeordnete Striegelgerät, das in einer Ausführungsform der Erfindung ein Stempelgerät mit aufgesetzten Striegelzinken ist, wird mit einer höheren Drehgeschwindigkeit angetrieben als die Fahrgeschwindigkeit. Die Striegelzinken sind auf der Striegelwalze so angeordnet, daß sie exakt zu beiden Seiten der Saatrille arbeiten und in die über dem Erdniveau entstandenen Erdanhäufungen eingreifen. Durch den Zwangsantrieb der Striegelwalze ist sichergestellt, daß die über der Erde liegenden organischen Massen zwangsweise durch die Scharstiele gefördert und befreit werden. Das rotierende Striegelgerät drückt den zum Keimen erforderlichen Feinerdeanteil in die durch die Zinken gerissene Rille gegen das Saatgut, die Anhäufungen an den Scharstielen beidseitig der Säschare werden durch diesen rotierenden Striegel aufgelöst und als Feinschleier gleichmäßig hinter der Maschine verteilt; ferner werden die Särillen durch den rotierenden Striegel eingeebnet, und es wird die Krümelstruktur des Bodens verbessert. Die Scharstiele, die mit dem Striegelgerät zusammenwirken, können in Achsrichtung einen erheblich geringeren, z.B. einen halb so großen Abstand wie die vorauslaufenden Scharstiele, die mit dem Stempelgerät zusammenwirken, aufweisen, so daß damit z.B. die doppelte Anzahl von Scharstielen innerhalb einer Scharstielreihe angeordnet werden kann, wodurch die Baulänge der gesamten Maschine verringert werden kann. Die Anzahl der hintereinander angeordneten Stempel- bzw. Striegelgeräte und der diesen zugeordneten Scharstielreihen kann auch größer als zwei gewählt werden.

Die einzelnen Scharstiele sind hohl ausgebildet und nehmen die Särohre bzw. -schläuche auf. Andererseits kann das Innere der Scharstiele unmittelbar in Form von Särohren ausgebildet sein. Damit sind die Särohre in den Scharstielen gegen Beschädigungen aller Art gesichert. Am Boden eines jeden Scharstieles ist ein auswechselbares Scharelement befestigt, das nach vorne und unten gekrümmt ist, z.B. teilkreisförmig. Dieses Scharelement ist an einem in gleicher Weise gekrümmten Träger festgeschraubt, der mit dem unteren Ende des Scharstieles durch eine horizontale Trägerplatte befestigt ist, welches als Stützfläche auf dem Boden aufsitzen und verhindern kann, daß der untere Scharstielbereich in den Boden eindringt und verstopft wird. Das auswechselbare Scharelement ist ein Verschleißteil, das auf extrem einfache Weise durch Lösen z.B. einer Schraube gewechselt und ersetzt werden kann. Die Schraube ist dabei auf der Wirkseite versenkt und auf der entgegengesetzten Seite, also zwischen Trägerplatte und Scharstiel durch die Schraubmutter gesichert. Desweiteren ist das Scharelement über seine gesamte Längserstreckung mit gleicher Breite ausgeführt und am vorderen Ende, also an der Eingriffsstelle mit dem Boden pfeilförmig ausgebildet.

Nachstehend wird die Erfindung in Verbindung mit der Zeichnung anhand von Ausführungsbeispielen erläutert. Es zeigen:

Fig. 1 eine Stempelvorrichtung nach der Erfindung in schematischer Darstellung hinter einer Scheibenegge bzw. einem Grubber,

Fig. 2 die Anordnung nach Fig. 1 in Verbindung mit einer Sävorrichtung mit Saatgutauslauf vor, zwischen und/oder hinter der Stempelvorrichtung,

Fig. 3 ein Stempelwerkzeug der Stempelvorrichtung mit pilzförmiger Ausbildung der Stempelelemente,

Fig. 4 ein Stempelwerkzeug mit Stempelelementen etwa in Dreieckform,

Fig. 5 eine Folge von identischen Stempelwerkzeugen auf der gemeinsamen Achse in Umfangsrichtung versetzt,

Fig. 6 eine Folge von unterschiedlichen Stempelwerkzeugen nebeneinander auf der gleichen Achse versetzt,

Fig. 7 eine Anordnung von Stempelwerkzeugen auf zwei parallelen, hintereinander angeordneten Achsen, wobei die Stempelelemente ineinandergreifen,

Fig. 8 eine Anordnung aus mehreren Stempelelementen auf zwei parallelen Achsen, wobei die Stempelelemente in Achsrichtung zueinander versetzt sind,

Fig. 9 in schematischer Darstellung eine Anordnung von Gruppen von zwei hintereinander geschalteten Stempelwerkzeugen in seitlicher Ansicht,

Fig. 10 eine Ansicht der Anordnung nach Fig. 9, von hinten,

Fig. 11 eine schematische Darstellung der Arbeitsweise der Erfindung,

Fig. 12 eine Aufsicht auf das mit der Vorrichtung erzielte Abdruckmuster zweier hintereinander und zweier nebeneinander geschalteter Stempelwerkzeuge,

Fig. 13 eine spezielle Ausführungsform eines Stempelwerkzeuges in seitlicher Ansicht,

Fig. 14 eine schematische Darstellung der Wirkungsweise der Vorrichtung nach Fig. 13,

Fig. 15 eine schematische Seitenansicht einer anderen Ausführungsform eines Stempelwerkzeugs,

Fig. 16 eine schematische perspektivische Anordnung der Darstellung nach Fig. 15,

Fig. 17 eine weitere Variante eines Stempelwerkzeuges in seitlicher Ansicht,

Fig. 18 die Darstellung eines einzelnen Stempelelementes in einer weiteren Variante,

Fig. 19 eine schematische Aufsicht auf eine Sävorrichtung nach der Erfindung,

Fig. 20 eine schematische Seitenansicht der Sävorrichtung nach der Erfindung,

Fig. 21 eine Prinzipdarstellung der Arbeitsweise einer vergleichbaren Sävorrichtung nach dem Stand der Technik,

Fig. 22 eine Prinzipdarstellung der Sävorrichtung nach der Erfindung,

Fig. 23 eine schematische Seitenansicht einer anderen Ausführungsform einer Direktsämaschine nach der Erfindung,

Fig. 24 eine schematische Darstellung einer Frontansicht der Direktsämaschine nach Fig. 23,

Fig. 25 eine Frontansicht eines Scharstieles der Direktsämaschine nach Fig. 23,

Fig. 26 eine Seitenansicht eines Scharstieles nach Fig. 25, und

Fig. 27 in Aufsicht eine Prinzipdarstellung der Arbeitsweise der Direktsämaschine nach Fig. 23.

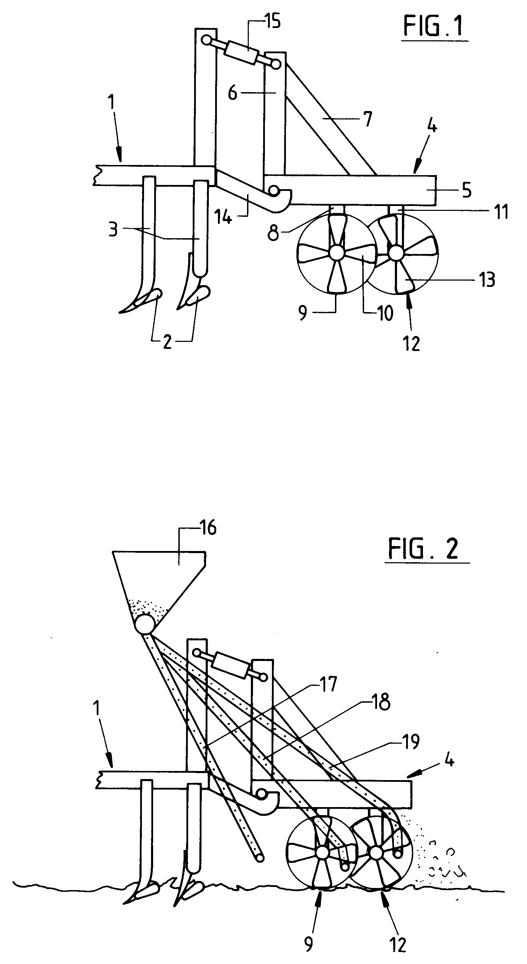

In Fig. 1 und 2 ist das Bodenverfestigungsgerät an einem vom Schlepper aufgenommenen Maschinenrahmen 1 befestigt, der Scharelemente 2, Scheiben einer Scheibenegge, Grubber oder dgl. an Scharstielen 3 aufnimmt. Mit 4 ist der Gesamtrahmen des Stempelgerätes bezeichnet, der aus einem horizontalen Rahmenteil 5 sowie Rahmenverstrebungen 6 und 7 ausgebildet ist. Vom Rahmenteil 5 stehen Stützträger 8, 11 nach abwärts, die zwei parallel zueinander und hintereinander angeordnete Achsen 9, 12 des Stempelgerätes und auf diesen Achsen die Stempelwerkzeuge 10, 13 aufnehmen; in Achsrichtung sind entsprechend der Breite des Stempelgerätes eine Vielzahl gleicher oder unterschiedlicher Stempelwerkzeuge angeordnet. Mit 14 ist ein Tragarm dargestellt, der das Stempelgerät mit dem Maschinenrahmen 1 lösbar verbindet. Eine weitere Verbindung erfolgt über eine Vestellvorrichtung mit Antriebszylinder 15, über die das Stempelgerät hochschwenkbar ist.

In Fig. 2 ist zusätzlich ein Säkasten 16 dargestellt, von dem Särohre 17, 18, 19 ausgehen, die entsprechend der Darstellung nach Fig. 2 wahlweise den Auslauf der Särohre vor dem Stempelgerät (Särohr 17), zwischen den Achsen des Stempelgerätes (Särohr 18) und/oder hinter dem Stempelgerät (Särohr 19) haben.

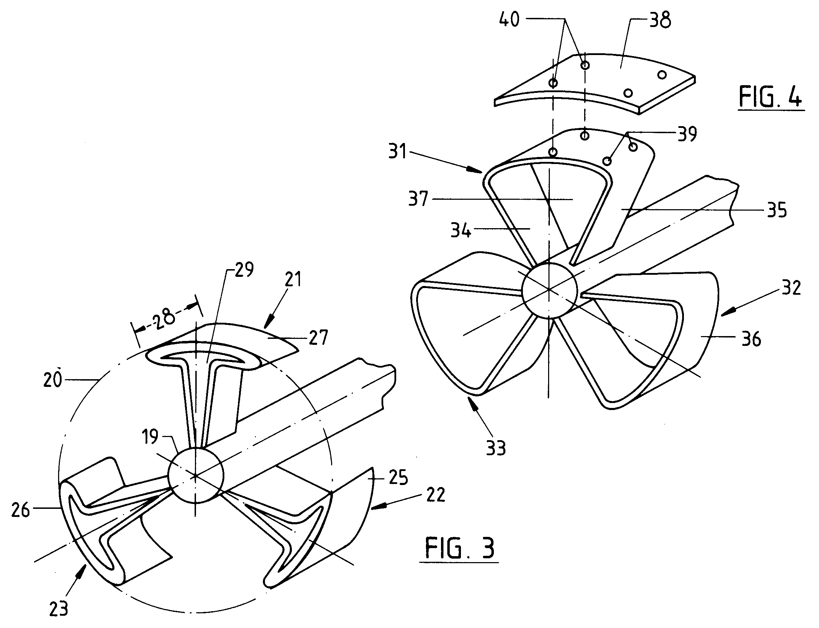

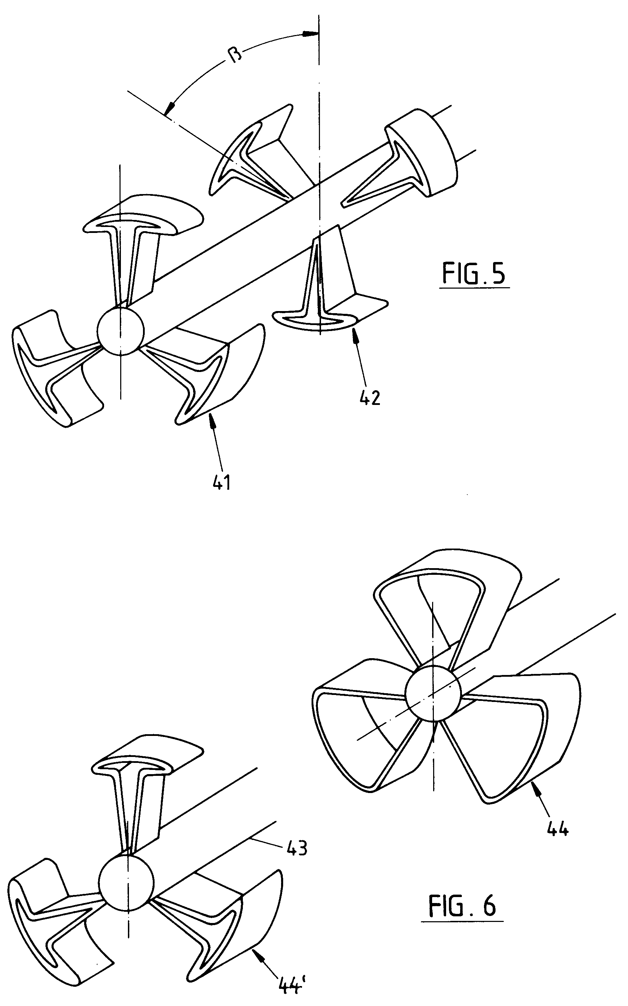

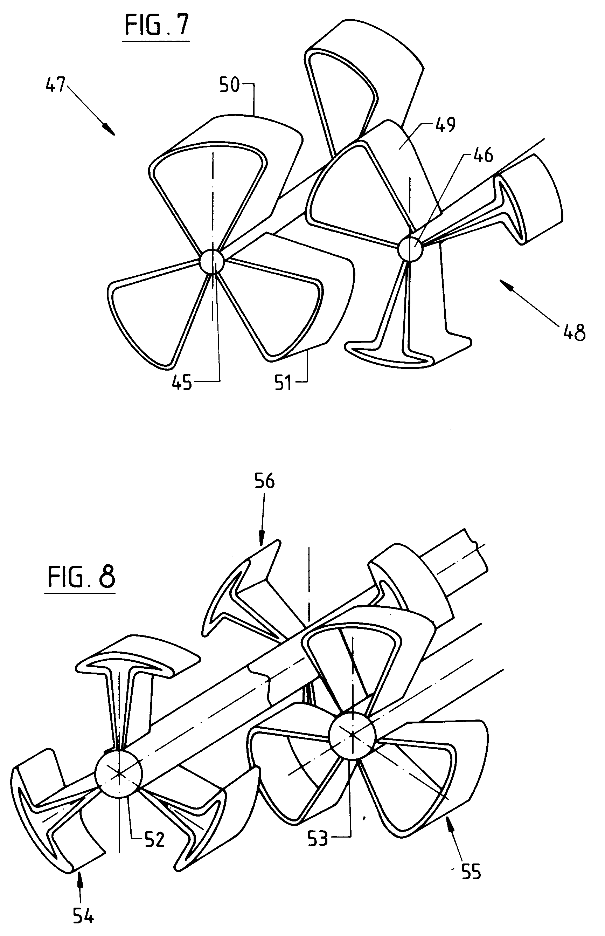

In den Figuren 3 und 4 sind zwei verschiedene beispielsweise Ausführungsformen eines Stempelwerkzeuges 10, 13 in Schrägansicht dargestellt. Auf einer quer zur Fahrtrichtung angeordneten Achse 19 des Gerätes (Fig. 3) sind in Umfangsrichtung gleichförmig versetzt die einzelnen Stempelelemente 21 - 26 angeordnet, deren radial äußere Begrenzungsflächen auf einem Umfangskreis 20 liegen. Die Stempelstiele 21, 22, 23 mit radial äußeren Stempelköpfen 24, 25, 26 sind auf der Achse gleichförmig in Umfangsrichtung versetzt befestigt. Die Teile des den Umfangskreis 20 bildenden Wirkflächen 27 der Werkzeugelemente haben voneinander einen Abstand, der so bemessen ist, daß das zwischen zwei benachbarten Werkzeugelementen befindliche Erdreich sich nicht verdichten kann, sondern sich während des Betriebes selbsttätig löst und nach unten auf den Boden fällt. Dieser Abstand zwischen zwei benachbarten Werkzeugelementen ist bei einer speziellen Ausführung der Erfindung nach den Figuren 7 und 8 auch dadurch bestimmt, daß zwei in Fahrtrichtung hintereinander angeordnete Stempelwerkzeuge ineinandergreifend angeordnet werden können, wie weiter unten noch ausgeführt wird.

Die Stempelstiele 21, 22, 23 können sich radial nach außen erweitern, wie dies in Fig. 3 dargestellt ist, und in die Stempelköpfe 24, 25, 26 übergehen, wobei in den Stempelstielen und Stempelköpfen aus Material- und Gewichtsersparnisgründen Hohlräume 29 vorgesehen sind. Die Stempelstiele können jedoch auch als Träger mit gleichförmiger Dicke ausgebildet sein, an die die Stempelköpfe radial außen anschließen.

Bei der Ausführungsform nach Fig. 4 sind auf der umlaufenden Achse 30 Stempelelemente 31, 32, 33 befestigt, die im Querschnitt hohle Dreieckform besitzen und deren jeweils beide radial verlaufenden Seiten 34 und 35 einen radial nach außen zunehmenden Abstand voneinander aufweisen. Die radial äußeren Begrenzungen der Seitenflächen 34 und 35 sind durch eine Umfangsfläche 36 miteinander verbunden, die die dritte Seite des Dreiecks darstellt. 37 bezeichnet den inneren Hohlraum eines einzelnen Stempelelementes 31. Die Umfangsfläche 36 eines jeden Stempelelementes 31, 32, 33 ist bei der speziellen Ausführungsform nach Fig. 4 so ausgelegt, daß auf sie eine kongruente Arbeitsfläche 38 auswechselbar aufgesetzt ist, wobei die Flächen 36 und 38 Schraubbohrungen 39 und 40 besitzen, über die die Arbeitsfläche 38 mit der Umfangsfläche 36 verbunden wird. Bei einer derartigen Ausführungsform kann somit die Arbeits- bzw. Wirkfläche des Stempelelementes, die Teil des Umfangskreises 20 ist, bei Beschädigung oder Abnutzung ausgewechselt werden. Diese Anordnung kann auch bei der Ausführungsform nach Fig. 3 gewählt werden.

Fig. 5 zeigt zwei nebeneinander auf einer Welle 41 angeordnete Stempelwerkzeuge 41, 42, die in bezug auf ihre Stempelelemente um einen Winkel $\beta$ in Umfangsrichtung gegeneinander versetzt sind, während in Fig. 6 eine Ausführungsform dargestellt ist, bei der zwei verschiedenartige Werkzeugelemente, nämlich nach Fig. 3 und Fig. 4, auf einer gemeinsamen Welle 43 angeordnet dargestellt sind.

Bei der Anordnung nach Fig. 7 sind auf zwei parallelen, in Fahrtrichtung hintereinander angeordneten Achsen 45, 46 zwei Stempelelemente 47, 48 dargestellt, die in Umfangsrichtung so zueinander versetzt sind, daß das Stempelelement 49 in die durch die Stempelelemente 50, 51 des Stempelwerkzeuges 47 ausgebildeten Freiräume zahnradartig eingreift, wobei die Stempelelemente der beiden miteinander zusammenwirkenden Stempelwerkzeuge einen Abstand voneinander haben. Hierbei ist schematisch angedeutet, daß die Stempelelemente in beliebiger Weise ausgebildet und miteinander kombiniert werden können, z.B. wie in Fig. 3 und 4 dargestellt.

Fig. 8 schließlich zeigt eine Ausführungsform, bei der zwei parallele Wellen 52, 53 Stempelwerkzeuge 54, 55, 56 aufweisen, die im Abstand voneinander auf den Achsen befestigt sind, so daß sie auf Lücke arbeiten.

Bei praktischen Ausführungsformen der Erfindung können eine beliebige Anzahl von parallelen Wellen hintereinander angeordnet sein, damit die Bodenfläche gleichförmig und vollständig von den Wirkflächen bearbeitet wird.

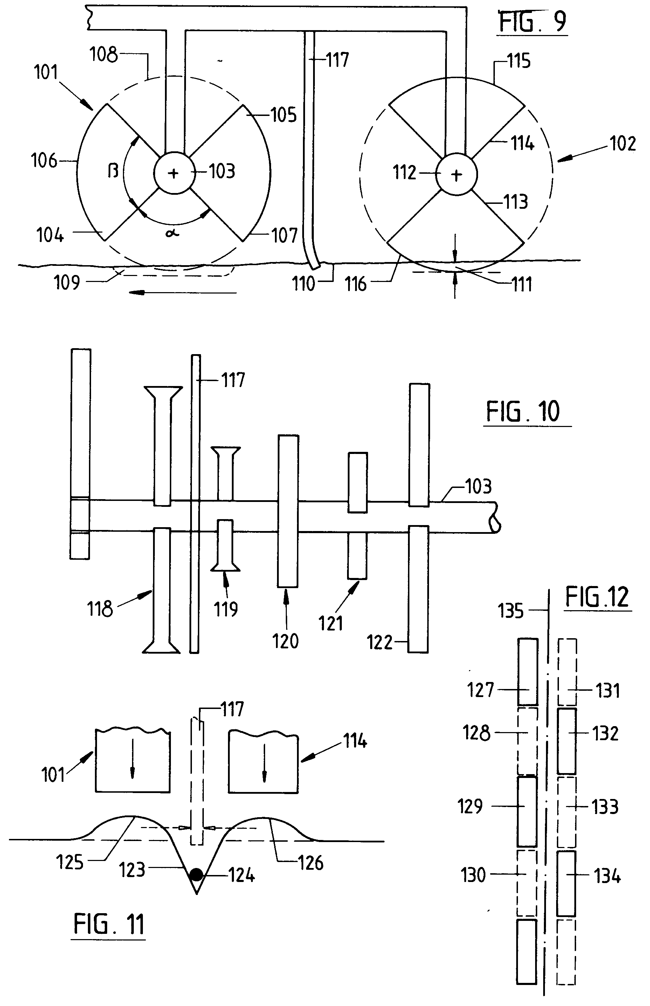

In Fig. 9 sind schematisch zwei Stempelwerkzeuge 101 und 102 dargestellt, die im Abstand hintereinander angeordnet sind. Die Antriebswelle 103 des Werkzeuges 101 weist zwei diametral gegenüberliegende Stempelelemente 104, 105 auf, deren jeweilige Wirk- bzw. Arbeitsflächen mit 106 und 107 bezeichnet ist. Diese Arbeitsflächen 106, 107 fallen mit dem Umkreis 108 zusammen, der durch Drehung des Stempelwerkzeuges auf der Welle 103 gebildet wird. Mit 109 ist der Abdruck der Wirkfläche 106 bzw. 107 im überfahrenen Boden 110 angedeutet, wobei die Tiefe des Abdruckkes 111 durch das Gewicht der Gesamtvorrichtung in Abhängigkeit von der Bodenbeschaffenheit bestimmt ist, jedoch durch Verwendung von Stützrädern oder dgl. einstellbar ausgebildet sein kann. Die Wirk- bzw. Arbeitsflächen 106, 107 erstrecken sich über einen Winkel $\beta$ des Umfangskreises, die freie Fläche 108 zwischen den Arbeitsflächen 106, 107 entspricht einem Winkel $\alpha$, so daß $2\alpha + 2\beta = 360°$. Dem Stempelwerkzeug 101 ist das Stempelwerkzeug 102 zugeordnet, das dem Stempelwerkzeug 101 entspricht und Stempelelemente 113, 114 mit Arbeits- bzw. Wirkflächen 115, 116 aufweist, die ähnlich wie die Stempelelemente 104, 105 ausgebildet sind. Der Abstand der Antriebswellen 103 und 112 kann kleiner als der Durchmesser der Stempelwerkzeuge ausgelegt sein, wenn die Stempelwerkzeuge 101 und 102 so angeordnet und ausgebildet sind, daß die Stempelelemente 113, 114 in die Freiräume zwischen den Stempelelementen 106, 107 eingreifen. In Längsrichtung der Achsen 103, 112 sind zwischen den jeweils hintereinander geschalteten Stempelwerkzeugen 101 und 102 Saatgutauslaßvorrichtungen 117 vorgesehen, über die das Sägut in die Särille ausgebracht wird, wie dies beispielsweise in Fig. 10 schematisch dargestellt ist. Die Saatgutauslaßvorrichtungen 117 können jedoch auch in Linie mit den einzelnen Wirk- bzw. Arbeitsflächen angeordnet sein. Wie in Fig. 10 dargestellt, sind auf der Antriebsachse 103 eine Reihe von getrennten Stempelwerkzeugen 118, 119, 120, 121, 122 angeordnet, die zweckmäßigerweise in ihrer Position auf der Antriebsachse 103 im Winkel zueinander versetzt sind. Gleiches gilt für die Anordnung entsprechender Elemente auf der Antriebsachse 112.

In Fig. 11 ist schematisch die Arbeitsweise der Vorrichtung dargestellt. Mit Säscharen werden Särillen 123 gezogen, in die das Sägut 124 über die Saatgutauslaßvorrichtungen 117 abgelegt wird. Durch das Ziehen der Särillen 123 entstehen links und rechts der Särille Erhebungen 125, 126, die durch die Stempelwerkzeuge beim Überfahren eingeebnet werden, wobei das Erdreich der Erhebungen 125 und 126 in die Särille 123 gedrückt wird, so daß das Sägut 124 von Erdreich bedeckt wird. Dieses Bedecken und Verfestigen des Bodens erfolgt z.B. nach einem Schema, wie in Fig. 12 dargestellt. Hierbei stellt jede der rechteckförmigen Flächen den Abdruck einer Wirk-bzw. Arbeitsfläche 106, 107; 115, 116 auf dem überfahrenen Boden dar, wobei die Flächen 127, 129 einen Abdruck der Wirkflächen 106, 107 und die Flächen 128, 131 (gestrichelt) einen Abdruck der Flächen 115, 116 darstellen. Die Flächen 131, 133 und 132, 134 entsprechen Abdrücken von Wirkflächen des benachbarten Stempelwerkzeuges auf der gleichen Antriebswelle 103. Die Länge der Abdrücke entspricht jeweils dem Abschnitt 106, 107; 115, 116 des Umfangskreises. Die Breite der Abdrücke entspricht der Breite der Wirk- bzw. Arbeitsflächen. Die Symmetrielinie 135 gibt die Lage des Sägutes in der Särille 123 an.

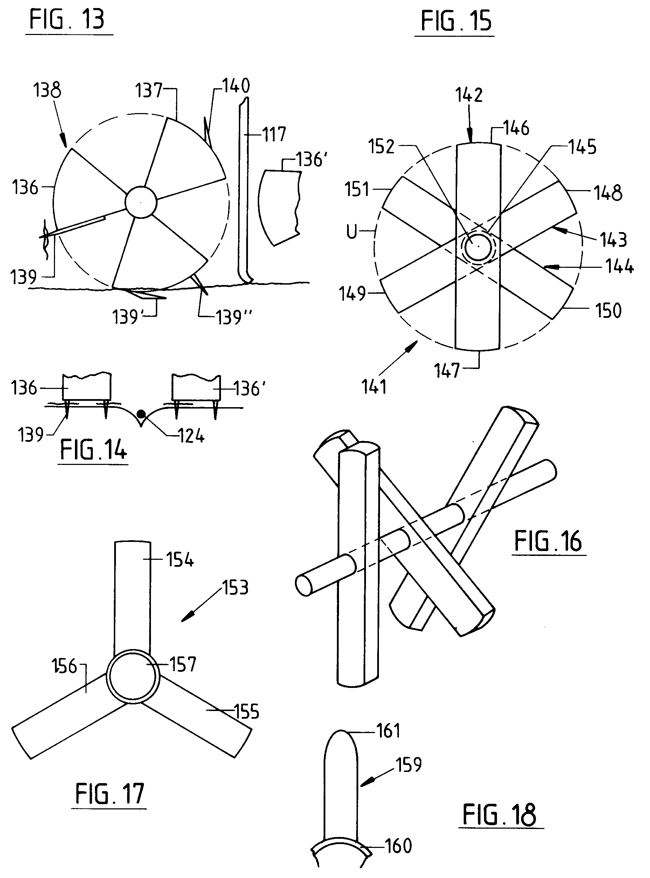

Bei der Ausführungsform eines Stempelwerkzeuges nach Fig. 13 sind den Wirk- bzw. Arbeitsflächen 136, 137 eines Stempelwerkzeuges 138 in radialer Richtung über die Wirk-bzw. Arbeitsfläche nach außen vorstehende Zwangsniederhalteelemente 139, 140 zugeordnet, die die Form eines Nagels, Zackens, Stiftes oder dgl. haben, und deren Aufgabe darin besteht, bei Bodenkontakt dort aufliegendes organisches Pflanzenmaterial aufzuspießen, mit der Drehung des Stempelwerkzeuges anzuheben und während der Drehbewegung wieder auf den Boden abzugeben bzw. fallen zu lassen, damit verhindert wird, daß beim Überfahren des Bodens im Bereich der Särille dieses Pflanzenrestmaterial hochsteigt, die Särille verlegt oder dgl.. Anstelle eines derartigen Stiftes, Nagels oder Zackens können auf einer Wirkfläche mehrere derartige Elemente vorgesehen sein. Die Elemente können in radialer Richtung, im Winkel hierzu oder auch angenähert tangential zur Wirkfläche verlaufend angeordnet sein; sie können auch am Stempelelement bzw. am Stempelstiel befestigt sein und über die Wirkfläche nach außen vorstehen.

Bei der Ausführungsform nach den Fig. 15 - 18 sind die Stempelelemente in Form von Rohren ausgebildet, die von der Antriebswelle aus radial nach außen verlaufen und auf ihrer Außenfläche geschlossen sind, so daß diese Außenfläche die Wirk- bzw. Arbeitsfläche bildet. Die Rohre können dabei kreisrunden, rechteckförmigen, quadratischen oder ähnlichen Querschnitt haben, so daß die Wirkfläche einen entsprechend geformten Abdruck ergibt. Im Falle der Ausführungsform nach Fig. 15 ist das Stempelwerkzeug 141 durch Stempelelemente 142, 143, 144 gebildet, die innerhalb eines Umkreises U angeordnet sind und die mittige Bohrungen 145 aufweisen, in denen sie auf der Antriebswelle 152 befestigt sind. Hierbei besteht jedes Stempelwerkzeug 141 aus zwei durch ein einziges Rohr gebildeten Stempelelementen mit diametral gegenüberliegenden Wirk- bzw. Arbeitsflächen 146, 147; die beiden anderen Stempelelemente 143 und 144 weisen jeweils Wirkflächen 148, 149 und 150, 151 auf. Die Stempelelemente 142, 143 und 144 sind auf der gemeinsamen Achse 146 um jeweils 60° gegeneinander versetzt angeordnet. Ein Stempelwerkzeug kann jedoch im Rahmen vorliegender Erfindung auch mehrere Stempelelemente in Umfangsrichtung versetzt zueinander aufweisen, so daß die Wirkflächen einen kleineren Winkelabstand als 180° voneinander haben.

Beispielsweise ist ein Stempelwerkzeug 153 in Fig. 17 dargestellt, das drei Stempelelemente 154, 155, 156 auf der Antriebswelle 157 in der Umfangsebene aufweist, wobei die radialen Stempelelemente jeweils einen Abstand von 120° voneinander haben. In Längsrichtung der Welle 157 sind weitere Stempelwerkzeuge, vorzugsweise im Winkel versetzt zueinander angeordnet. Fig. 18 zeigt ein Stempelelement 159 auf einer Antriebswelle 160, dessen Wirkfläche ballig bei 161 ausgebildet ist. Auch hierbei sind vorzugsweise in einer Umfangsebene eine Mehrzahl von Stempelelementen auf der Welle 157 befestigt.

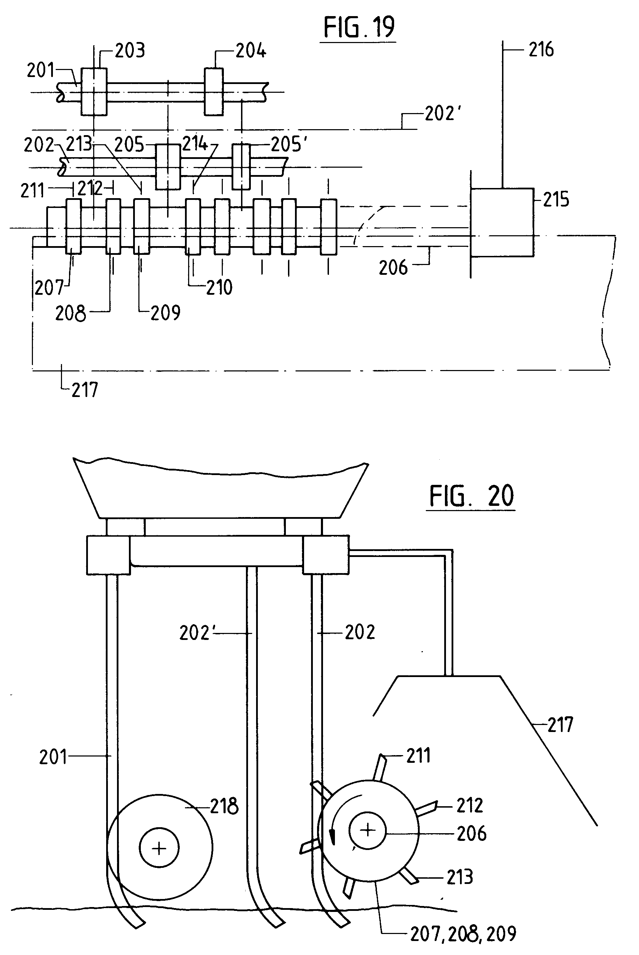

In Fig. 19 sind schematisch Achsen 201 und 202 der Sämaschine dargestellt, die Scharstiele bzw. Saatrohre 203, 204, 205, 205' aufnehmen bzw. halten. Hierbei handelt es sich um eine zweireihige Sämaschine, d.h. um eine solche, in der die Saatrohre 203, 204, 205, 205' bzw. deren Ausläufe oder Schare in zwei in Bewegungsrichtung der Vorichtung versetzten Reihen angeordnet sind. Der Achse 202 ist eine Welle 206 nachgeschaltet, die als Striegelwalze ausgebildet ist und die Striegelelemente 207, 208, 209, 210 aufweist, deren Striegelzinken 211, 212, 213, 214 in Umfangsrichtung radial oder im Winkel versetzt nach außen verlaufend angeordnet sind und nach Art von Abstreifern mit den Scharstielseitenflächen zusammenwirken, um an den Scharstielen angehäuftes, mit Erdreich vermischtes organisches Material abzustreifen und hinter der Saatgutablagestelle auf dem Boden zu verteilen, zerkleinern und zu egalisieren. Auf dem Umfang der Striegelelemente 207 - 210 sind in der Regel jeweils mehrere Striegelzinken 211 - 214 in Umfangsrichtung versetzt hintereinander angeordnet. Die Welle 206 bzw. Walze ist mit einem Getriebe 215 gekoppelt, das über eine Zapfwellenverbindung 216 angetrieben wird und das die Welle 206 mit einer Umfangsgeschwindigkeit antreibt, die wesentlich größer ist als die Fahrgeschwindigkeit der Sämaschine. Über und hinter der Striegelwalze 206 ist schematisch eine Abdeckhaube 217 dargestellt, die einen Schutz gegen abgeschleudertes Erdreich bzw. Steine bietet und die den abgeschleuderten Erdstrom lenken kann, falls dies erwünscht ist. Die Striegelzinken sind ein- oder mehrreihig angeordnet, sie können über dem Boden angeordnet sein oder auch in den Boden eingreifen. Hierzu ist die Striegelwalze höhenverstellbar ausgebildet.

Bei einer bevorzugten Ausführungsform der Erfindung ist die Striegelwalze in Arbeitshöhe so angeordnet, daß sie die durch die Scharstiele entstandenen Erdanhäufungen zu beiden Seiten der Saatrille andrückt und damit die Erdreicherhebungen an den Anhäufungsstellen niederdrückt und auf dies Weise das Saatgut bedeckt. Dieses Bedecken kann jedoch auch durch ein der Striegelwalze vorauslaufendes, jedoch hinter der Saatgutablage angeordnetes, rotierendes, auf den Boden einwirkendes Bearbeitungselement erfolgen, so daß in diesem Fall die Striegelwalze nicht in das Erdreich eingreifen muß.

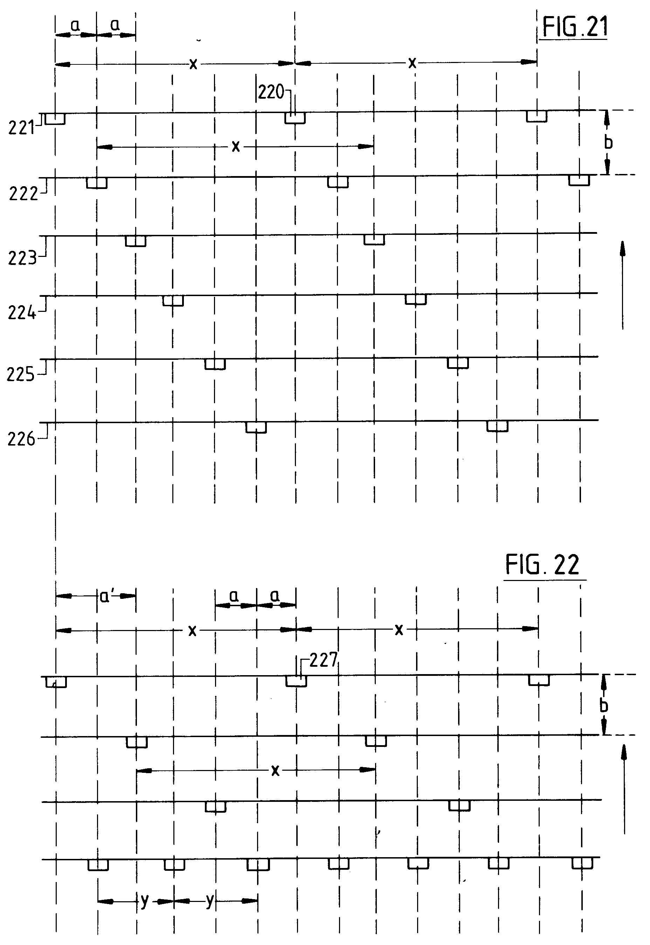

Bei der Darstellung nach Fig. 20 ist der Striegelwalze eine vorauslaufende Abstützwalze 218 vorgesehen.

Wie de Fig. 19 zeigt, ist der Abstand zwischen den vorauseilenden Saatrohren 203 und 204 wesentlich größer als bei den nacheilenden Saatrohren 205 und 205', d.h. bei der dargestellten Ausführungsform ist der Abstand zwischen den Saatrohren 203 und 204 etwa doppelt so groß wie der entsprechende Abstand zwischen den Saatrohren 205 und 205'.

Sofern ein gleicher Furchenabstand gefordert wird, ist eine weitere Reihe von Saatgutrohren 203 und 204 vorgesehen, und zwar in Bewegungsrichtung der Vorichtung vor den Saatrohren 205 und 205', wobei die Reihen mit den Saatgutrohren 203 und 204 jeweils auf Lücke versetzt sind.

Fig. 21 zeigt schematisch eine Maschine bekannter Art, bei der die Scharstiele und damit die Saatgut auslässe durch kleine Quadrate 220 und die die Scharstiele aufnehmenden horizontalen, parallelen Rahmenträger durch horizontale Linien 221 - 226 dargestellt sind. Die Scharstiele sind im Abstand a der einzelnen Saatreihen in horizontaler Richtung und im Abstand b der Rahmenträger gegeneinander versetzt am Rahmen befestigt. Jeweils zwei Scharstiele eines Rahmenträgers haben einen Abstand von X = 6a. Dieser Abstand X ist für alle Scharstiele innerhalb der Maschine gleich groß. Bei einem Abstand von X = 6a für alle Scharstiele sind somit sechs Rahmenträger hintereinander erforderlich.

Bei der Maschine nach der Erfindung (Fig. 22) beträgt der Abstand zweier benachbarter Scharstiele 227 eines Rahmenträgers ebenfalls X = 6a. Die Scharstiele zweier hintereinander angeordneter Rahmenträger 228, 229, 230 sind jedoch in einem Abstand a' = 2a voneinander versetzt; der Abstand b der Rahmenträger ist durchgehend gleich groß. Des weiteren sind die Scharstiele 227 der Reihe 231 (der hintersten Reihe) jeweils um einen Abstand y = 2a voneinander versetzt, so daß die Maschine nach Fig. 22 bei gleicher Anzahl von Scharstielen und Säreihen sowie gleichem Säreihenabstand und Rahmenträgerabstand lediglich vier Rahmenträger benötigt, d.h. eine wesentlich kürzere Baulänge hat. Jeder der Säreihen ist dabei sowohl bei der Anordnung nach Fig. 21 als nach Fig. 22 ein einziger Saatgutauslaß zugeordnet.

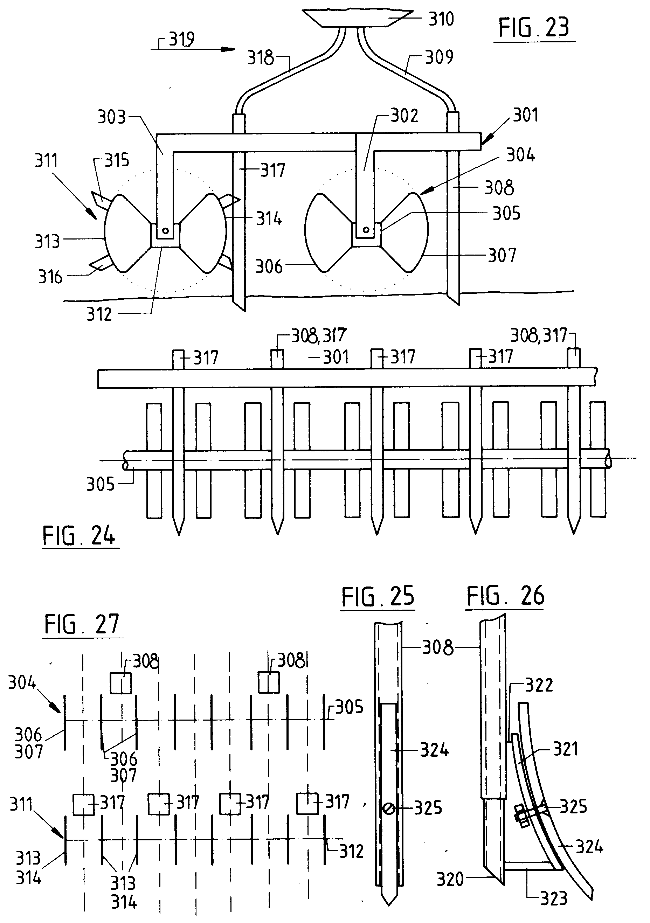

Die Direktsämaschine nach den Fig. 23 - 27 weist einen Maschinenrahmen 301 auf, an dem vertikale, in Fahrtrichtung hintereinander angeordnete Träger 302, 303 (im Falle einer zweireihigen Maschine) angeordnet sind. Am Träger 302 ist ein walzenförmiger Stempelpacker 304 befestigt, dessen Achse 305 rotierend angetrieben ist. Der Stempelpacker 304 besteht aus segmentförmigen Stempelelementen 306, 307, deren Umfangswirkfläche durch Leerabschnitte unterbrochen ist. Diese Stempelpackerwalze, die aus der Vielzahl von parallel nebeneinander auf der Achse 305 angeordneten Stempelelementen 306, 307 besteht, nimmt auf dem Boden liegend das Gewicht der Direktsämaschine auf. In Arbeitsrichtung vor der Stempelpackerwalze 304 sind eine Vielzahl von nebeneinander angeordneten Scharstielen 308 vorgesehen, die jeweils über Zuleitungen 309 mit einem Saatgutbehälter 310 verbunden sind. Die Scharstiele sind in einem Abstand von etwa 60 - 80 cm voneinander angeordnet, und jeweils einem Scharstiel sind links und rechts je ein einzelnes Stempelelement zugeordnet (dargestellt sind zwei um 180° in Umfangsrichtung versetzte Stempelelemente 306, 307), die die kleinen Erdreichwälle, die durch das die Särille im Boden ziehende Säschar verursacht werden, in Richtung zur Särille andrücken und damit das Saatgut bedecken.

In Fahrtrichtung hinter dem Stempelpacker 304 ist ein (oder wahlweise auch mehrere) walzenförmiges Striegelgerät 311 auf einer angetriebenen Achse 312 vorgesehen, das im speziellen Fall ähnlich dem Stempelpacker 304 ausgebildet ist, jedoch auf der Umfangsfläche radial nach außen stehende Zinken 315, 316 aufweist. Das Striegelgerät 311 wird ebenfalls zwangsangetrieben, und zwar mit höherer Umlaufgeschwindigkeit als der Fahrgeschwindigkeit entspricht. Vor dem Striegelgerät 311 sind eine Mehrzahl von Scharstielen 317 am Rahmen 301 befestigt, die über Saatgutzuführleitungen 318 mit dem Saatgutbehälter 310 verbunden sind. Die Fahrtrichtung ist mit 319 angedeutet. Die Zinken 315, 316 des Striegelgerätes 311, deren Breite z.B. 30 mm beträgt, und die als Verschleißteil auswechselbar auf dem Umfang der Striegelwalze befestigt sind, werden durch den Boden und durch die über dem Boden befindliche organische Masse gezogen, so daß sie in die über dem Boden entstandenen Erdreichanhäufungen und die organische Masse eingreifen und letztere zwangsweise durch die Scharstiele fördern, somit eine Zwangsbefreiung durchführen. Die Striegelzinken sind in bezug auf die Scharstiele so angeordnet, daß sie genau links und rechts des Scharstieles bzw. der Särille arbeiten. Während die Scharstiele 308 in Verbindung mit dem Stempelpacker 304 einen weiten Abstand von ca. 60 -80 cm haben, damit die auf dem Boden liegenden organischen Restbestandteile nicht zu Verstopfungen zwischen den Scharstielen führen, ist der seitliche Abstand der Scharstiele 317 innerhalb einer Reihe etwa halb so groß gewählt, d.h. 30 - 40 cm, und zwar dadurch bedingt, daß das Striegelgerät, das mit höherer Umlaufgeschwindigkeit angetrieben wird als der Fahrgeschwindigkeit entspricht, mit Hilfe seiner Striegelzinken die organischen Teile zerkleinert und/oder zwangsweise zwischen den Scharstielen hindurchfördert. Durch die etwa doppelte Anzahl von Scharstielen 317 gegenüber der Reihe von Scharstielen 308 läßt sich die Baulänge der gesamten Direktsämaschine erheblich reduzieren. Diese Anordnung ist schematisch in Fig. 27 angedeutet, in der die Achse 305 des Stempelpackers 304 und die Achse 312 des Striegelgerätes 311 schematisch von oben in Verbindung mit den zugehörigen Scharstielen 308 und 317 angedeutet sind.

Die Scharstiele sind bei einer speziellen Ausführungsform der Erfindung so ausgebildet, daß sie Hohlstiele sind, so daß das Innere der Scharstiele entweder unmittelbar als Saatgutzuleitung verwendet wird, oder aber Rohrleitungen, Schlauchleitungen oder dgl. durch die hohlen Scharstiele geführt werden, in denen das Saatgut zugeführt wird. Am bodenseitigen Ende sind die Scharstiele mit ener Tragkonstruktion 321, 322, 323 für das Säscharelement 324 versehen, das mittels Schraubverbindung 325 an der Trägerplatte 321 festgeschraubt ist, wobei die Trägerplatte 321 und das Säscharelement 324 an der gemeinsamen Auflagefläche mit gleicher Krümmung ausgebildet sind. Der untere Halter 323 ist eine mit dem Scharstiel 308 verschweißte horizontale Platte, die als Abstützung für die Maschine dienen oder dazu beitragen kann.

**Patentansprüche**

1. Vorrichtung zum Verfestigen des Bodens mittels Stempelelementen, für Bodenbearbeitungs- und Sävorgänge, **dadurch gekennzeichnet,** daß die Stempelelemente (10, 13; 24, 25, 26; 31, 32, 33) auf einer horizontalen Achse (9, 12; 19; 30; 41, 43, 45, 46; 52, 53) angeordnete umlaufende und radial nach außen gerichtete Werkzeuge sind, deren Querschnitt sich in radialer Richtung von innen (Stempelstiel) nach außen (Stempelkopf) vergrößert, und daß die auf dem äußeren Umfangskreis (20) ausgebildeten Wirkflächen (27; 36, 38) bzw. deren in radialer Richtung erzeugte Projektion des Stempelkopfes (24, 26; 31, 32, 33) einen größeren Flächeninhalt als die Querschnittsfläche des Stempelstieles (21, 22; 33, 34, 35) hat, wobei die Vorrichtung boden- oder fremdangetrieben sein kann.

2. Vorrichtung nach Anspruch 1, dadurch gekennzeichnet, daß der Abstand zweier benachbarter Stempelwerkzeuge (10, 13) in axialer Richtung voneinander gleich oder größer dem Abstand zweier benachbarter Stempelelemente (21, 22, 23) in Umfangsrichtung auf dem Umfangskreis (20) ist.

3. Vorrichtung nach Anspruch 1 oder 2, dadurch gekennzeichnet, daß der Stempelstiel so ausgebildet ist, daß er nach Beendigung des Verfestigungsvorganges das unmittelbar neben der Stempelwirkfläche befindliche Material in Aussparungen bzw. Hohlräumen aufnimmt und anschließend als lose, dünne Schicht über den verfestigten Boden auswirft, und daß die Stempelwerkzeuge auf mehreren, parallelen, horizontalen, rotierenden Achsen nebeneinander und im Abstand zueinander versetzt angeordnet sind, wobei die horizontalen Achsen mit Stempelwerkzeugen vorzugsweise über Ketten- oder Kardangelenke miteinander verbunden angetrieben sind.

4. Vorrichtung nach einem der Ansprüche 1 - 3, dadurch gekennzeichnet, daß eine Vielzahl von Stempelelementen in radialer Richtung zueinander versetzt auf parallelen horizontalen Achsen angeordnet sind, und daß der Abstand zweier benachbarter Achsen kleiner als die Summe der Radien der auf ihnen befestigten Werkzeuge ist.

5. Vorrichtung nach einem der Ansprüche 1 - 4, dadurch gekennzeichnet, daß die auf einer gemeinsamen Achse angeordneten Einzelwerkzeuge zueinander in Umfangrichtung so versetzt sind, da sie eine in Achsrichtung horizontal gewendelte kontinuierliche Hüllfläche ergeben.

6. Vorrichtung nach einem der Ansprüche 1 - 5, dadurch gekennzeichnet, daß die Stempelelemente seitlich neben bzw. wahlweise über einer Körnerauslaufvorrichtung und dieser zugeordnet so angeordnet sind, daß die Wirk- bzw. Arbeitsflächen der Stempelelemente auf die beidseitig der Särille beim Rillenziehen entstandenen Bodenunebenheiten in dem Sinne einwirken, daß diese Erhebungen durch die Wirkflächen der Stempelelemente angedrückt werden und das Erdreich zurück in die Särille gedrückt wird, die radial äußeren Wirkflächen der Stempelelemente eines Werkzeuges einen gedachten Umfangskreis bilden und längs dieses Umfangskreises einen ausreichend großen Abstand voneinander haben, damit anhaftendes Erdreich und organisches Material keine Brücke zwischen zwei benachbarten Stempelelementen bilden kann, und die Ebene der Werkflächen der Stempelelemente in der Umkreisebene liegt und die Wirkfläche auf der Bodenfläche abrollt, derart, daß die gekrümmte Wirkfläche auf der Erdreichoberfläche einen etwa planen Abdruck mit einstellbarer Tiefe erzeugt.

7. Vorrichtung nach Anspruch 1, dadurch gekennzeichnet, daß die im Winkel gegeneinander in Umfangsrichtung versetzten Stempelelemente pro Werkzeug auf der Achse bzw. den Achsen der Vorrichtung befestigt sind, und daß eine Mehrzahl derartiger Stempelwerkzeuge im Abstand voneinander auf der Achse bzw. den Achsen angeordnet sind, wobei vorzugsweise die einzelnen axial auf der Achse bzw. den Achsen der Vorrichtung voneinander beabstandeten Stempelwerkzeuge in Umfangsrichtung zueinander versetzt angeordnet sind.

8. Vorrichtung nach Anspruch 6 oder 7, dadurch gekennzeichnet, daß die Stempelelemente auf der bzw. im Bereich der Wirk- bzw. Arbeitsfläche in radialer Richtung oder im Winkel dazu nach außen verlaufende Zacken, Nägel, Stäbe oder dergl. Zwangsniederhalterelemente aufweisen, wobei vorzugsweise die Stempelelemente als rohrförmige Elemente mit über im wesentlichen die gesamte Länge gleichbleibendem Querschnitt ausgebildet sind, und wobei die Wirk-bzw. Arbeitsflächen der Stempel ballig ausgebildet sind.

9. Verfahren zum Säen von Saatgut mit Minimalbodenbearbeitung in einem Arbeitsgang, bei dem im Erdreich Saatrillen gezogen werden und anschließend das abgelegte Saatgut mit dem über der Bodensohle liegenden bearbeiteten Erdreich abgedeckt wird, dadurch gekennzeichnet, daß das in den Särillen abgelegte Saatgut in einem letzten Arbeitsschritt des Säverfahrens mit einer rotierend angetriebenen Vorrichtung, insbes. Striegelwalze mit dem zu beiden Seiten der Särillen vorhandenen Scharstielanhäufungen bedeckt und gleichzeitig die an den Scharstielen angesammelte, Erdreich aufweisende organische Masse hinter den Scharstielen bzw. Saatrohren verteilt und egalisiert wird, wobei die rotierende Vorrichtung, insbes. Striegelwalze, mit gleicher oder höherer Umfangsgeschwindigkeit als die Fahrgeschwindigkeit angetrieben wird.

10. Vorrichtung nach Anspruch 1, dadurch gekennzeichnet, daß das letzte und den Sävorgang beschließende Bearbeitungselement der Sävorrichtung eine rotierend angetriebene, auf ihrer Mantelfläche mit Zacken, Zinken oder dergl. Striegelelementen versehene Walze ist, die auf die zu beiden Seiten der Särillen vorhandenen Scharstielanhäufungen das Saatgut bedeckend eingreift und die an den Scharstielen (mit Saatgutauslaufvorrichtungen) angesammelte, evt. mit Erdreich vermischte organische Masse von den Scharstielen abnimmt und hinter dem Saatgut verteilt, wobei vorzugsweise die Umfangsgeschwindigkeit der Striegelwalze gleich oder höher ist als die Fahrgeschwindigkeit, wobei vorzugsweise zwei oder mehr Striegelwalzen hintereinander angeordnet sind, und wobei zur Vermeidung einer Verstopfungsgefahr durch Steine und dergl. die Striegelzinken vorzugsweise federnd ausgebildet sind.

11. Vorrichtung nach Anspruch 10, dadurch gekennzeichnet, daß mehrere Saatrohre mit ihrem jeweiligen Auslauf bzw. mit dem dortigen Schar in wenigstens zwei Reihen quer bzw. senkrecht zur Bewegungsrichtung der Vorrichtung angeordnet sind, und daß die Ausläufe der Saatrohre in den Reihen jeweils unterschiedliche Abstände aufweisen, wobei vorzugsweise die Ausläufe der Saatrohre in der bezogen auf die Bewegungsrichtung der Vorrichtung beim Säen in der letzten oder ggf. vorletzten Reihe einen gegenseitigen Abstand aufweisen, der kleiner ist als der entsprechende Abstand der Ausläufe in der bezogen auf die Bewegungsrichtung vorausgehenden Reihe, z.B. etwa die Hälfte des Abstandes der Ausläufe der vorausgehenden Reihe beträgt, und wobei vorzugsweise die angetriebene Walze im Bereich der Saatrohre der letzten und/oder vorletzten Reihe vorgesehen ist.

12. Vorrichtung zum Direktsäen mit mehrreihig angeordneten Säscharen, mit verstellbaren Scharstielen (mit Saatgutauslaufvorrichtungen) und den Boden bis zur wasserführenden Schicht aufreißenden Zinken nach Anspruch 1, gekennzeichnet durch

a) ein walzenförmiges Abtast- oder Stützgerät, das mit mindestens einer Reihe von Saatrohren zusammenwirkt, wobei jeweils ein Abtast- oder Stützelement einseitig oder beidseitig des Scharstieles angeordnet ist und vorzugsweise das durch die Säschare angehobene Erdreich in die Saatrille drückt, und

b) ein angetriebenes rotierendes Striegelgerät vorzugsweise in der Reihe mit den engeren Scharstielabständen mit auf der Umfangsfläche versetzten, radial verlaufenden Zinken hinter dem Abtast- oder Stützgerät, das hinter einer weiteren Reihe von Scharstielen und mit diesen Scharstielen zusammenwirkend angeordnet ist.

13. Vorrichtung nach Anspruch 12, dadurch gekennzeichnet, daß die Saatrohre innerhalb hohler Scharstiele angeordnet sind, und daß die Saatzuführungsleitungen in den Scharstielen integriert und in Form von Kunststoffschläuchen oder Metall- bzw. Kunststoffrohren ausgebildet sind.

14. Vorrichtung nach Anspruch 12 oder 13, dadurch gekennzeichnet, daß die Säscharelemente als Verschleißelemente ausgebildet sind, die auswechselbar am Scharstiel bzw. einem mit dem Scharstiel fest verbundenen Träger befestigt sind, wobei vorzugsweise das Säschar in Form einer gekrümmten, stehend befestigten Platte ausgebildet ist, und wobei vorzugsweise die Breite des Säschares kleiner als oder gleich der Breite des Scharstieles ist, sowie der untere Abschnitt im steilen Winkel zur Horizontalen und in Fahrtrichtung nach vorne gekrümmt ausgebildet ist.

15. Vorrichtung nach Anspruch 14, dadurch gekennzeichnet, daß der Träger des Säschares eine im Abstand vom Scharstiel angeordnete Trägerplatte aufweist, die der Krümmung des Säscharelementes entsprechend geformt ist, und daß die Trägerplatte im bodennahen Bereich durch einen Steg mit dem unteren Ende des Scharstieles befestigt ist, wobei vorzugsweise der Steg eine etwa horizontale Trägerplatte etwa der Breite des Scharstieles ist, und wobei vorzugsweise der Steg bzw. die Trägerplatte als Abstützung des Scharstieles auf dem Boden ausgebildet und die Bodenfläche des Scharstieles selbst abgeschrägt ist und wobei vorzugsweise das mit dem Boden in Eingriff stehende Ende des Säscharelementes nach vorne und unten spitz zulaufend ausgebildet ist.

16. Vorrichtung nach Anspruch 15, dadurch gekennzeichnet, daß die Scharstiele der in Fahrtrichtung hinteren Reihe(n) in einem geringerem Abstand angeordnet sind als die Scharstiele der vorderen Reihe, und daß die Scharstiele der verschiedenen Reihen auf Lücke zueinander stehen, wobei der Abstand der Scharstiele der hinteren Reihen vorzugsweise die Hälfte des Abstandes der Scharstiele der vorderen Reihe beträgt.

17. Vorrichtung nach einem der vorausgehenden Ansprüche, dadurch gekennzeichnet, daß die Scharstiele mit Saatgutauslaufvorrichtung als Scheibenschare ausgebildet sind.

FIG.1

FIG. 2

FIG. 4

FIG. 3

FIG.5

FIG. 6

FIG. 7

FIG. 8

FIG. 9

FIG. 10

FIG. 11

FIG.12

FIG. 13

FIG. 15

FIG.14

FIG.16

FIG. 17

FIG.18

18

FIG.19

FIG. 20

FIG.21

FIG. 22

FIG. 23

FIG. 24

FIG. 25

FIG. 26

FIG. 27